# EUROPEAN PATENT APPLICATION

(11) **EP 2 665 065 A2**
(43) Date of publication of application: **20.11.2013**
(21) Application number: 12198253.2
(22) Date of filing: 19.12.2012
(51) Int. Cl.: G11C 16/00, G06F 12/02

(54) **Electronic device employing flash memory**

(30) Priority: 23.02.2012 KR 20120018431
(71) Applicant: Samsung Electronics Co., Ltd, Gyeonggi-do 443-742 (KR)
(72) Inventor: Lee, Jun-Woo, Gyeonggi-do (KR)
(74) Representative: Gover, Richard Paul

(57) **Abstract**

A flash memory device and an electronic device employing thereof are provided for efficiently processing data that is larger than a page size of a data block and for processing data that is smaller than the page size of the data block. The flash memory device preferably includes a plurality of flash arrays therein and the plurality of flash arrays is divided into partitions depending on at least two or more page sizes, thereby advantageously improving the performance of random write.

## Description

### BACKGROUND OF THE INVENTION

### 1. Field of the Invention

The present invention generally relates to a flash memory device. More particularly, the present invention relates to a flash memory device that can efficiently support, for example, an array of a small page size in an electronic device.

### 2. Description of the Related Art

As smart phones and other types of mobile devices become more and more widespread worldwide, the demand for a mobile storage system has continued to increase. To meet this increased demand, recently, a flash memory based storage system is being in the spotlight.

More particularly, a Not AND (NAND) flash device, a non-volatile memory, is being widely used as a storage medium of a portable electronic devices such as mobile phone because it is inexpensive and makes possible high integration and large capacity. A NAND flash memory chip is miniaturized, for example, up to 2 x nanometers (nm) or so to increase productivity. However, as the construction of the NAND flash produces more miniaturized flash devices, the characteristic of a NAND flash memory deteriorate because of several reasons including a narrow gap between cells, the occurrence of interference, and an increase of the probability of a bit error.

In addition, as the NAND flash memory construction process produces more miniaturized flash devices, a time (tPROG) required for programming a NAND flash cell transistor increases. If the time (tPROG) increases compared to a previous process, a speed of the NAND flash memory device itself decreases. To complement this aforementioned effect, a page size of the NAND flash memory device that is at a particular level at one time is increased. The earliest page size of the NAND flash memory device was 2 KiloBytes (KB), 4 KB or so, but, recently, the page size of the NAND flash memory device has increased up to 16 KB.

However, as a current level of the page size being input/output at one time has increased, when processing data of a size level smaller than the current level decreases a speed of processing per byte. In a case of a mobile phone, there is not only large size data being processed such as a snapshot or video recording, but also small size data such as a Short Message Service (SMS), a phonebook, schedule management and the like is also processed.

Accordingly, a NAND flash memory device for efficiently processing both big data and small data is needed.

### SUMMARY OF THE INVENTION

An aspect of the present invention is to provide a NAND flash memory device for efficiently processing data that is larger than a page size of a data block and for processing data that is smaller than the page size of the data block.

Another exemplary aspect of the present invention is to provide a NAND flash memory device for improving a partial data write speed.

The above exemplary aspects are achieved by providing a flash memory device according to the present invention.

According to another exemplary aspect of the present invention, a flash memory device preferably includes a plurality of flash arrays therein and the plurality of flash arrays is divided into partitions depending on at least two or more page sizes.

According to still another exemplary aspect of the present invention, a flash memory device preferably includes a buffer, a controller, and a plurality of flash arrays. The buffer, for example, buffers data. The controller controls the writing of data to the buffer into a page of a block of a corresponding flash array, or reads from the buffer, data previously-stored in the page of the block of the corresponding flash array. The plurality of flash arrays preferably stores the buffered data or according to a memory command of the controller, provides previously stored data to the buffer,. The plurality of flash arrays is divided into partitions depending on at least two or more page sizes.

According to a further another exemplary aspect of the present invention, an electronic device is preferably includes a flash memory device for storing data, and one or more processors (or microprocessors) for processing instructions. The flash memory device performs data write/read/erase under control of the one or more processors (or microprocessors). The flash memory device includes a plurality of flash arrays therein. The plurality of flash arrays is divided into partitions depending on at least two or more page sizes.

According to a yet another exemplary aspect of the present invention, a method for storing data in a flash memory device preferably includes selecting any one of a plurality of flash array groups corresponding to at least two or more page sizes, depending on a data pattern, and storing the data in a flash array corresponding to the selected page size.

According to a still another exemplary aspect of the present invention, a method for storing data in a flash memory device preferably includes determining an Input/Output (I/O) pattern size, when the I/O pattern size comprises a large-capacity sequential write pattern, selecting a first (1st) flash array and storing first data in the first flash array; and when the I/O pattern size comprises a random partial data pattern, selecting a second flash array and storing the first data in the second flash array.

### BRIEF DESCRIPTION OF THE DRAWINGS

The above and other exemplary objects, features and advantages of the present invention will become more apparent from the following detailed description when taken in conjunction with the accompanying drawings in which:
FIG. 1 is a diagram illustrating a flash memory device according to an exemplary embodiment of the present invention;
FIG. 2 is a diagram illustrating a detail of a (NAND) flash array according to an exemplary embodiment of the present invention;
FIG. 3 is a diagram illustrating an exemplary hierarchical structure of a flash memory device according to the present invention;
FIG. 4 is a diagram illustrating a simple point-to-point mapping algorithm according to an exemplary aspect of the present invention;
FIG. 5 is a diagram illustrating exemplary operation of a block mapping technique according to an exemplary aspect of the present invention;
FIG. 6 is a diagram illustrating exemplary operation of a page mapping technique according to an exemplary aspect of the present invention;
FIG. 7 is a diagram illustrating an example of a partial data processing algorithm of a Flash Translation Layer (FTL) layer according to the present invention;
FIGS. 8A and 8B are diagrams illustrating a NAND flash memory device structure processing two kinds of page sizes according to an exemplary aspect of the present invention;
FIGS. 9A and 9B are diagrams illustrating a data processing algorithm in a NAND flash memory device according to an exemplary aspect of the present invention; and
FIG. 10 is a flowchart illustrating an exemplary operation of a NAND flash memory device according to an exemplary embodiment of the present invention.

### DETAILED DESCRIPTION

Preferred exemplary embodiments of the present invention will be described herein below with reference to the accompanying drawings. In the following description, well-known functions or constructions may not be described in detail when their inclusion would obscure the appreciation of the invention by the person of ordinary skill in the art with unnecessary detail regarding well-known functions or constructions. In addition, terms described below, which are defined considering functions in the present invention, can be different depending on user and operator's intention or practice. Therefore, the terms should be defined on the basis of the disclosure throughout this specification.

Below, the present invention describes a flash memory device for efficiently supporting an array of a small page size.

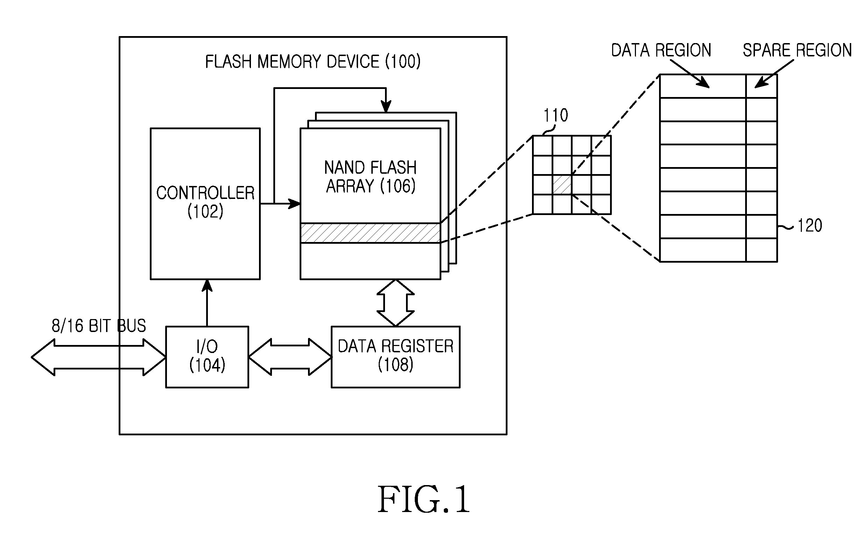

FIG. 1 illustrates a flash memory device according to an exemplary embodiment of the present invention.

Referring now to FIG. 1, the flash memory device 100 preferably includes a controller 102, an Input/Output (I/O) interface 104, a plurality of Not AND (NAND) flash arrays 106, and a data register 108. Each of the NAND flash arrays 106 includes a plurality of blocks 110, and each of the blocks 110 includes a plurality of pages 120. Each of the pages 120 has a data region of a fixed size and a spare data region. Each page 120 includes, although not illustrated, a plurality of sectors. Through an address mapping algorithm, the controller 102, which comprises hardware such as a processor or microprocessor, controls data read/write operations and the like between the data register 108 temporarily storing data and the plurality of NAND flash arrays 106.

Among the plurality of NAND flash arrays 106, a portion of the NAND flash arrays include a predetermined set of pages having a first page size, and the remainder NAND flash arrays include a predetermined set of pages having a second page size. The first page size is smaller than the second page size in order to process small data. The flash memory device 100 can perform data writes at a level of at least two or more page sizes. In the following description, a flash memory device having two page sizes is described, for example, but the person of ordinary skill in the art should understand and appreciate that more than two page sizes may be provided. The predetermined number of pages of a particular size is determined by block size and the page sizes can be changeable or fixed.

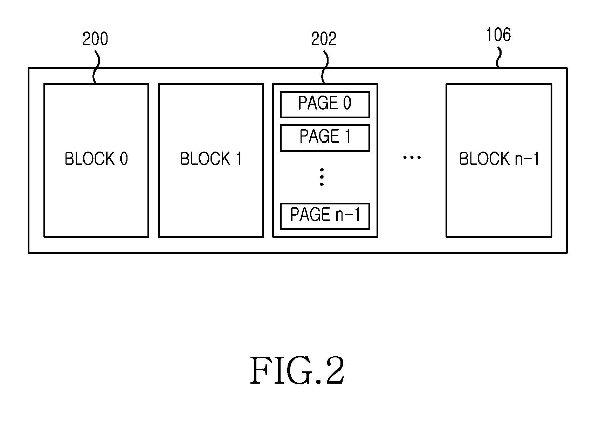

FIG. 2 illustrates a detail of a NAND flash array 106 according to the present invention.

Referring now to FIG. 2, a structure of the NAND flash array 106 is composed of a plurality of blocks 200, and each of the blocks 200 is composed of a plurality of pages 202. For instance, one block can be composed of, for example 4 or 128 pages. In addition, a page size may comprise, for example, 8 KiloBytes (KB), 16 KB or more. However the claimed invention is not limited to these values.

The flash memory device 100 performs read and write operations at a page level and performs erase operations at a block level.

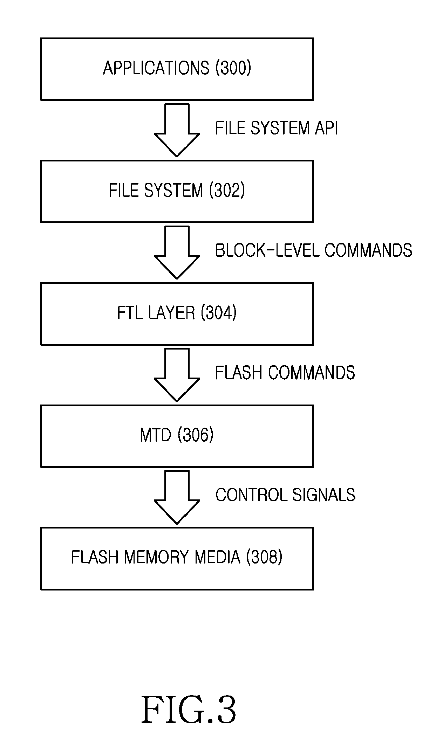

An operating system is preferably of a hierarchical structure in which a function is classified by each layer. Similarly, the flash memory device is also of a hierarchical structure as in FIG. 3 below.

FIG. 3 illustrates an example of a hierarchical structure of a flash memory device according to the present invention.

Referring now to FIG. 3, unlike an existing magnetic disk drive, the flash memory device preferably includes a Flash Translation Layer (FTL) 304 and a Memory Technology Device (MTD) 306 as main layers. An MTD driver mainly provides three low-level operations including read, write, and erase. Based on these low-level operations, the FTL layer 304 defines how to process each operation on a flash memory. In other words, the key role of an FTL driver is to provide an interface so that a file system 302 accesses the flash memory device at a block level. Also, the FTL layer 304 improves performance using a minimum buffer.

Furthermore, FIG. 3 shows a data flow diagram of the flash memory device. An application layer 300 generates an I/O request using a file system Application Program Interface (API) such as a file processing function (i.e., fread/write).

The file system 302 generally manages a storage system by a linear array made up of blocks of a fixed size. Accordingly, a file access command is changed into a plurality of block-level I/O requests by the file system 302, and each block-level I/O request includes specific Logical Block Address (LBA) and data block length information. This block-level I/O request is changed into a specific command provided by a flash memory through the FTL 304. The changed command is finally changed into a control signal and actually used for accessing a physical flash memory device.

The FTL layer 304 is described in more detail. For the flash memory device to operate, the FTL 304 provides, for example, logical-to-physical address mapping, wear-leveling, garbage collection, power-off recovery functions.

In the logical-to-physical address mapping, the file system 302 manages each data space as a logical linear space using an LBA. This LBA actually is mapped to a physical data space address.

This process is performed through an address mapping process, and applies a high-efficiency address mapping algorithm. In evaluating the address mapping algorithm, two factors are mainly taken into consideration. The first factor is a size of a mapping table. The mapping table needs to be accessed with low overhead because the mapping table is stored in a persistent space. Accordingly, it is preferable to have a smaller size mapping table. The second factor is query efficiency. In other words, as a system size increases, a well-designed mapping algorithm does not deteriorate in performance.

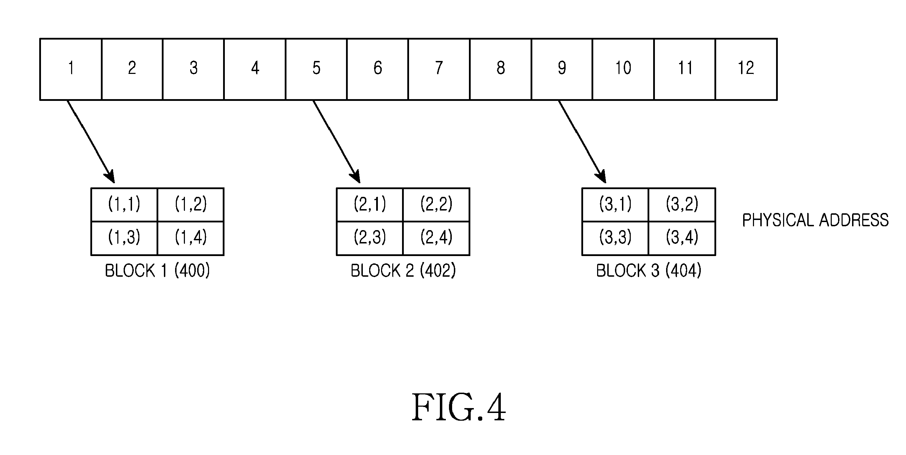

FIG. 4 illustrates a simple point-to-point mapping algorithm according to the present invention.

Referring now to FIG. 4, the point-to-point mapping algorithm can have direct access to a physical storage space with reference to a mapping table, when there is a request for a specific address space. In FIG. 4, a flash memory is composed of three blocks 400, 402, and 404, and each block is composed of four pages. Accordingly, the maximum LBA is equal to 12 in number, and each LBA is connected to a specific physical storage space. For instance, an LBA 5 is mapped to a physical address (2,1). However, in this point-to-point mapping algorithm, there is a problem that, as a data space increases, the size of the mapping table also increases.

To solve this address mapping algorithm problem, techniques for three mapping algorithms, i.e., page mapping, block mapping, and hybrid mapping are proposed.

In the page mapping, a specific physical page is mapped to an arbitrary page within one block. In other words, when a specific physical page is to change, new data is written in another physical page, and a previous page is nullified. This technique is referred to as an Out-of-Place technique.

In the block mapping, each logical block is mapped to a physical block. More particularly , a logical block and a physical block use the same page offset within a specific block. Accordingly, a specific page is written in the same offset position within the specific block, and this technique is called an In-place technique.

Finally, the hybrid mapping is a technique taking advantages of the page mapping and the block mapping. First, the hybrid mapping uses the block mapping when finding a physical block, and uses the page mapping when finding an available page within the physical block.

For example, a NAND flash memory device having a 16-KB page size may use the page mapping algorithm.

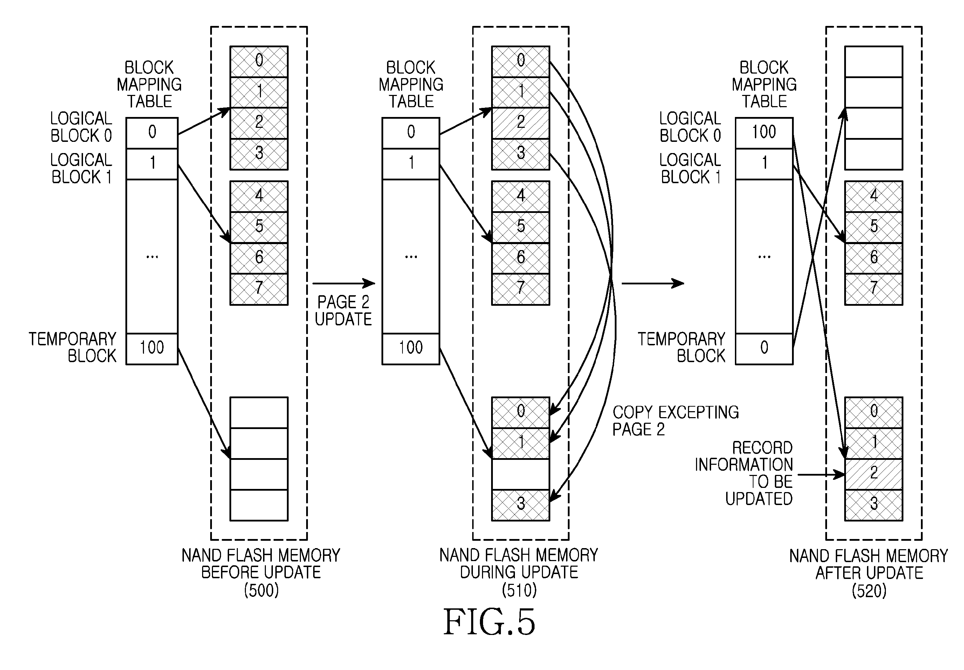

FIG. 5 illustrates an exemplary operation of a block mapping technique according to the present invention, showing the NAND before, during and after the update of a page.

Referring now to FIG. 5, a procedure of updating a page in the block mapping method is described below. Firstly, a new block is allotted. Then, the remnant pages excepting only a page to be updated are copied to the new block from the original block. Then, the page to be updated is recorded in the new block. Finally, a block mapping table is modified to substitute the original block with the new block. If so, the page update procedure is terminated.

For example, assume for a particular non-limiting example that the number of pages per block is equal to 4, and a page 2 among them is updated. In a case of using block mapping, a block mapping table exists in a memory region. A physical block number can be found through a logical block number using the block mapping table. As illustrated in FIG. 5, a logical block 0 is initially mapped to a physical block 0, and a temporary block uses a physical block 100 (500). At this time, a process of updating the page 2 is carried out. In other words, pages 0, 1, and 3 (excepting the page 2, which is going to be updated) of the first physical block (i.e., the physical block 0) are copied to the temporary block (i.e., the physical block 100) from the physical block 0 (510). After that, information to be updated is recorded in a page 2 of the temporary block (i.e., the physical block 100). As a result, it can be appreciated that the logical block 0 is mapped to the temporary (i.e., physical) block 100. Also, the existing physical block 0 is replaced with the temporary block (i.e., the physical block 100) (520).

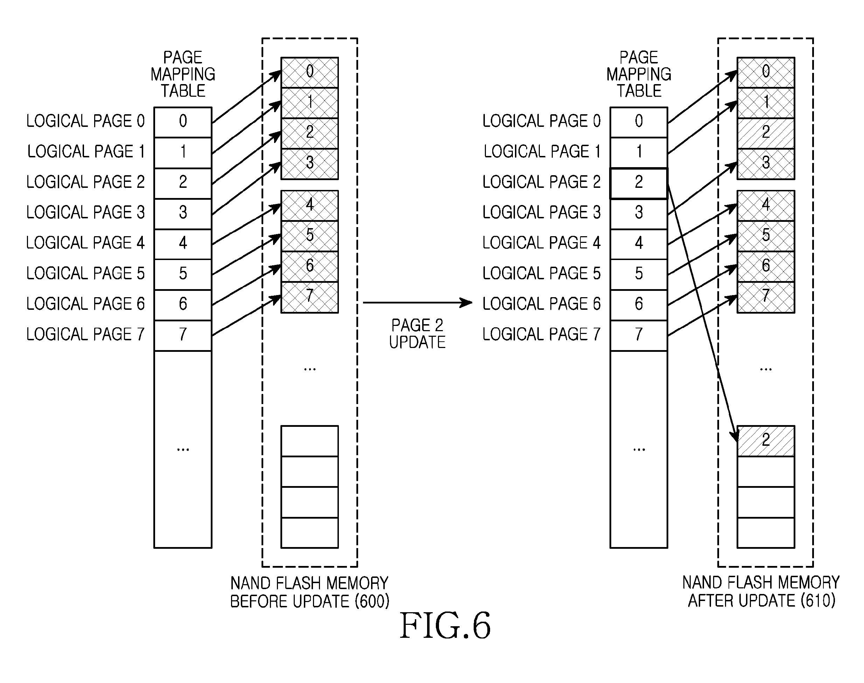

FIG. 6 illustrates an exemplary operation of a page mapping technique according to the present invention.

Referring now to FIG. 6, a procedure for updating a page in the page mapping method is described below. Firstly, logical page information to be updated is recorded in an arbitrary null physical page. Then, page mapping information about a corresponding logical page has only to change to indicate the physical page in which the logical page information is recorded.

For example, initially, a logical page 0 is mapped to a physical page 0, and a logical page 1 is mapped to a physical page 1, and similarly, a logical page 'N' is mapped to a physical page 'N'. In other words, the logical pages and the physical pages are mapped together on a point-to-point basis (600). After that, when a page 2 is updated, logical page information to be updated is recorded in an arbitrary null physical page, and a logical page 2 is mapped to the physical page in which the logical page information is recorded (610).

The page mapping scheme uses a big mapping table of a page level and as a result, a processing overhead resulting from the update is much less than that of a mapping scheme shown in FIG. 5. On the other hand, the block mapping scheme consumes a less memory because it uses only a mapping table of a block level, but there is a disadvantage that a large overhead is induced in a case in which an update of the page level occurs.

In an FTL basically managing mapping at a page level, a request for write of partial data smaller than a page size can occur.

For another non-limiting example of the presently claimed invention, a NAND flash memory device being presently launched can utilize a page size of 8 KB, 16 KB or more. In addition, the NAND flash memory device has been widely applied to electronic devices that include a mobile phone, and events of input/output of relatively small size data such as a system log, an e-mail, a phonebook, schedule management and the like are frequently occurring. Particularly, in a mobile platform such as a widely used Android Operating System (OS), there are many 4-KB random data Input/Outputs (I/O).

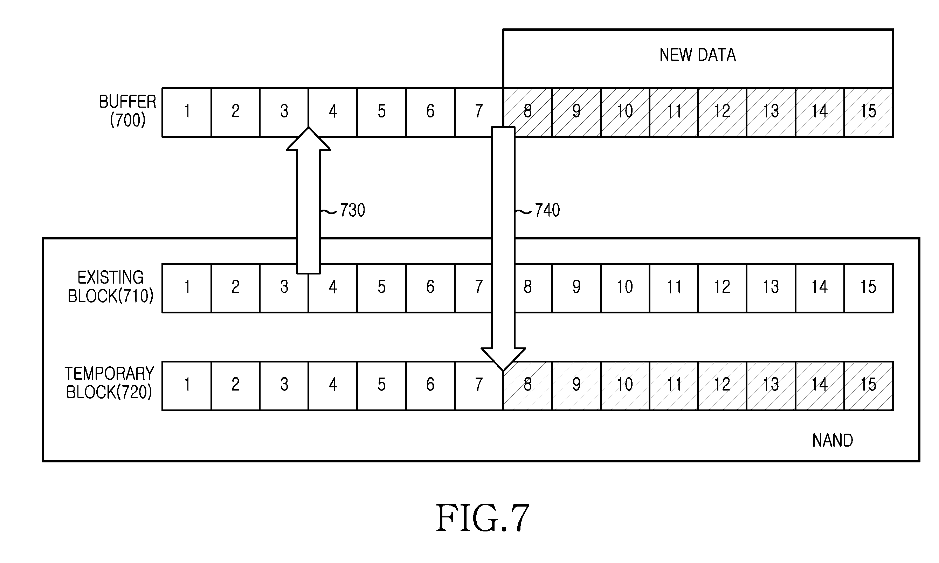

FIG. 7 illustrates a partial data processing algorithm of an FTL layer according to another exemplary aspect of the present invention.

Referring now to FIG. 7, upon a request for a write of a partial data smaller than a page size, the FTL layer basically managing mapping at a page level reads the remnant parts from an existing data block and pads the read parts.

The mapping of the FTL layer can be managed even at a sector level (smaller than a page), but there is a problem that a resource and an overhead upon realization are large because a size of a mapping table increases by geometric progression compared to block/page mapping and a NAND flash memory itself performs I/O at a page level.

For example, a pattern in which partial data of 4 KB is recorded in a NAND flash memory device of a page size of 8 KB is described below.

If a write command to sectors 8 to 15 is received from an application layer, the NAND flash memory device records new data in sectors 8 to 15 of a buffer 700 and then, reads (730) data from sectors 0 to 7 of a corresponding page of an existing data block 710 and pads the read data to sectors 0 to 7 of the buffer 700, thereby filling all the page sizes of the buffer 700. Next, the NAND flash memory device writes all the data of the buffer 700 into a temporary block 720. In the above example, a NAND array actually performs 8-KB data read and 8-KB data write, for the sake of 4-KB data write.

As described above, when writing data occurs which is smaller than a page size, the remnant portion of the page size is read from an existing data block and is padded to a buffer. Mapping of an FTL layer can be managed even at a sector level, but there is a problem that a resource and an overhead upon implementation are large because a size of a mapping table increases by geometric progression compared to block/page mapping and a flash memory device performs I/O at a page level.

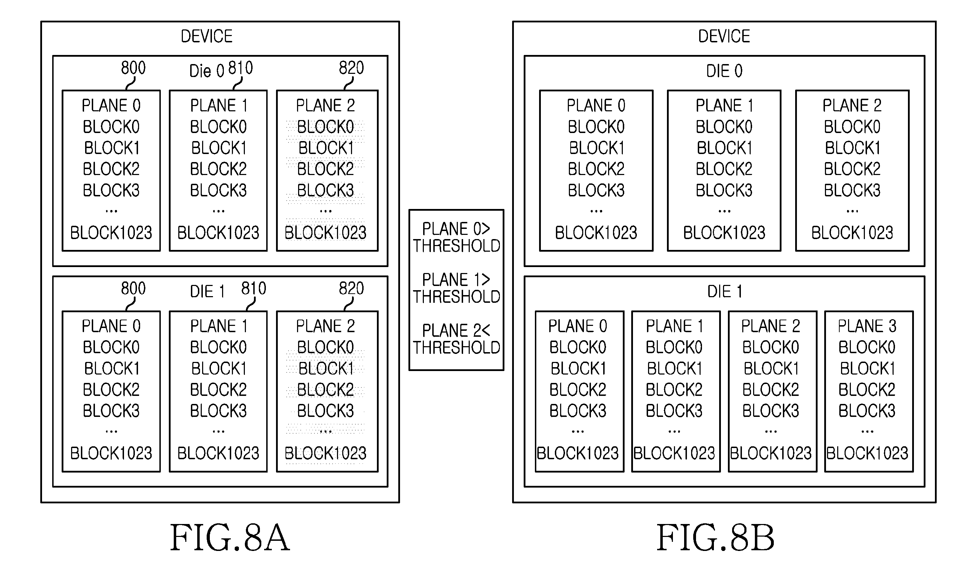

FIGS. 8A and 8B in conjunction with the discussion hereinbelow address the issue of an increased resource and overhead implementation due to decreased size of mapping portions of the memory. The present invention proposes a NAND flash memory device having a package of a plurality of NAND flash memory arrays reading/writing data at a small page size level and a plurality of NAND flash memory arrays reading/writing data at a large page size level, so that an array can be used that is appropriate to the size of the update.

FIGS. 8A and 8B illustrate a NAND flash memory device structure processing two kinds of page sizes according to an exemplary embodiment of the present invention.

Referring now to FIG. 8A, a plurality of blocks forms one plane, and a plurality of planes forms one die or chip. Additionally, a plurality of dies is gathered and constitutes a NAND flash memory device.

In the example shown in FIG. 8A, one die includes three planes (e.g., a plane 0, a plane 1, and a plane 2). Here, the plane 0 (800) and the plane 1 (810) each are a NAND flash array of a page size (e.g., 8 KB or 16 KB) larger than a threshold value, and the plane 2 (820) is a NAND flash array of a page size (e.g., 4 KB) smaller than the threshold value.

As illustrated in FIG. 8A, in one die, a plane 0 and a plane 1 each include a NAND flash array (i.e., an array of a plurality of blocks) of a large page size, and a plane 2 includes a NAND flash array of a small page size.
However, as illustrated in FIG. 8B below, a NAND flash array of a large page size and a NAND flash array of a small page size may be packaged by die or chip according to need. In FIG. 8B, one die includes three planes (i.e., a plane 0, a plane 1, and a plane 2). Here, in a die 0, a plane 0, a plane 1, and a plane 2 each include a NAND flash array of a large page size (e.g., 8 KB or 16 KB) and, in a die 1, a plane 0, a plane 1, a plane 2, and a plane 3 each can include a NAND flash array of a small page size (e.g., 4 KB).

As shown in FIGS. 8A and 8B, a memory region is divided into a plurality of partitions depending on at least one or more page sizes and, by each partition, data write/read are processed in a corresponding page size.

For example, when there are beyond a threshold amount of random data I/O of a small size from an application layer (small size as determined by a threshold number such as 4K data blocks), a NAND flash memory designates a small page size partition as a data block, thereby improving the performance of random write.

On the other hand, a page size of the NAND flash memory is not flexibly changed, taking into consideration a pattern of a target host device at the initial design.

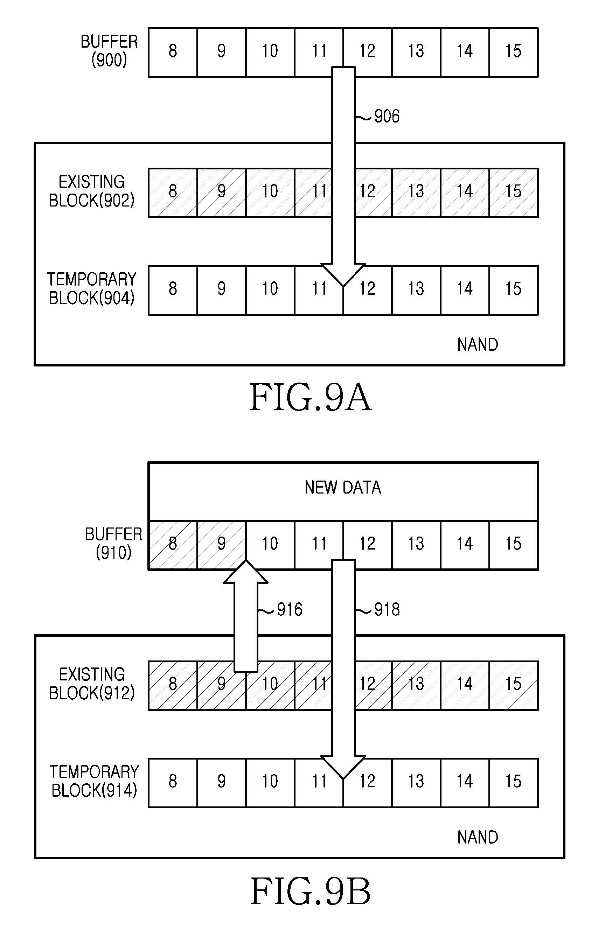

FIGS. 9A and 9B illustrate a data processing algorithm in a NAND flash memory device according to an exemplary embodiment of the present invention. Here, the NAND flash memory device composed of NAND flash arrays of a large page size (8 KB or 16 KB) and NAND flash arrays of a small page size (4 KB) is taken into consideration for illustrative purposes.

Referring now to FIG. 9A, when the NAND flash memory device performs a partial data write using a small page size partition, if data within a buffer 900 are aligned to 4 KB, sector padding is not required and, the 4-KB data of the buffer 900 has only to be written (906) into a temporary block 904, so the NAND flash memory device actually performs only 4-KB data write. In other words, the 4-KB data of the buffer 900 has to be written (906) into a temporary block 904, without sector padding.

Referring now to FIG. 9B, when new data smaller than a corresponding page size partition is input or is not aligned to 4 KB, data is read from an existing block 912 and is sector padded (916) only to a null portion of a buffer 910 and then, 4-KB data of the buffer 910 including the new data and the padded data is written (918) into a temporary block 914.

Although 4-KB data read and 4-KB data write are performed, the number of sectors is less than that of a page size of 8 KB or 16 KB and thus, a data I/O time is less than a data I/O time of a NAND flash array of a larger page size (for example, an 8 KB or 16 KB page size).

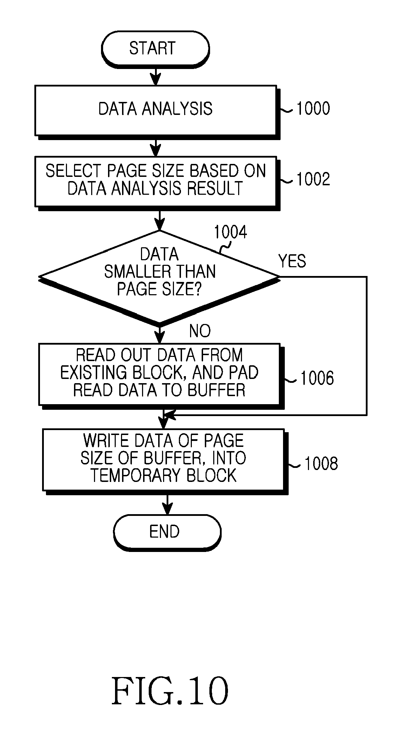

FIG. 10 illustrates an exemplary operation of a NAND flash memory device according to an exemplary embodiment of the present invention.

Referring now to FIG. 10, in step 1000, the NAND flash memory device analyzes a data pattern generated in an application layer. Typically, a controller is configured to perform such analysis of the data pattern.

Next, in step 1002, the flash memory device selects a page size based on the pattern analysis result. For example, typically the controller of the flash memory device is configured to select a memory partition of a larger page size for larger size data such as snapshot or captured moving picture, and selects a memory partition of a smaller page size for small size data such as a Short Message Service (SMS), a phonebook, and schedule management and the like. Such non-limiting examples of larger page sizes are 8KB, 16KB, and smaller page sizes of 4KB. After that, in step 1004, the flash memory device determines whether a data size is smaller than a page size. If the data size is smaller than the page size, the flash memory device proceeds to step 1006 and reads data from an existing block and pads the read data to a null portion of a buffer. In step 1008, the flash memory device writes page size data being in the buffer, into a temporary block (referring to FIG. 9B).

If the data size is larger than or equal to the page size, the flash memory device jumps to step 1008 and writes page size data being in the buffer, into the temporary block, straight without data padding (referring to FIG. 9A).

Next, the flash memory device terminates the procedure of the present invention.

The above-described methods according to the present invention can be implemented in hardware, firmware or as software or computer code that is stored in a recording medium such as a CD ROM, flash, EPROM, EEPROM, RAM, a floppy disk, thumbnail drive, a hard disk, or a magneto-optical disk or computer code downloaded over a network originally stored on a remote recording medium or a non-transitory machine readable medium and on a local recording medium, and loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed invention. Finally, the claimed invention can include the use of a location information server comprising more than one server, such as a proxy server.

For example, machine readable code stored on a non-transitory machine readable medium is executed by one or more hardware processors within an electronic device. One or more programs include instructions for enabling the electronic device to execute the methods according to the exemplary embodiments disclosed in the claims and/or the specification of the present invention.

The machine readable code can be stored in, for example, a Random Access Memory (RAM), a nonvolatile memory including a flash memory, a Read Only Memory (ROM), an Electrically Erasable Programmable ROM (EEPROM), a magnetic disk storage device, a Compact Disk ROM (CD-ROM), a Digital Versatile Disk (DVD) or an optical storage device of other form, and a magnetic cassette. Or, they can be stored in a memory configured in a combination of some or all of them. Also, each configuration memory may be included in plural.

As described above, in the present invention there is an advantage of being able to improve the performance of random write, by logically dividing each NAND flash array into each partition and determining a partition according to an I/O pattern size of a system or application, that is, allocating a large page size partition when there are many large-capacity sequential write patterns and allocating a small page size partition when there are many random partial data patterns.

While the invention has been shown and described with reference to certain preferred embodiments thereof, it will be understood by those skilled in the art that various changes in form and details may be made therein without departing from the spirit and scope of the invention as defined by the appended claims.

## Claims

1. A flash memory device comprising:
a plurality of flash arrays that store data;
a buffer coupled to one or more of the plurality of flash arrays for buffering data written to or read from said one or more of the plurality of flash arrays;
a controller configured to control writing data of the buffer into a page of a block of a corresponding flash array, or to control reading, data from the buffer being previously-stored in the page of the block of the corresponding flash array; and
wherein the plurality of flash arrays store data of the buffer coupled thereto or provide previously stored data to the buffer, according to control by the controller,
wherein the plurality of flash arrays is divided into partitions depending on at least two or more page sizes of data patterns.

2. The device of claim 1, wherein, when the data patterns comprise large-capacity sequential write data patterns greater than a first threshold number, a partition of a relatively larger page size from among the at least two or more page sizes is allotted, and
when there are greater than a second threshold number of random partial data patterns, a partition of a relatively smaller page size from among the at least two or more page sizes is allotted.

3. The device of claim 1, wherein the flash array comprises a plurality of blocks configured for storing data, and
each block of the plurality of blocks are comprised of a plurality of pages.

4. An electronic device comprising:
a flash memory device that stores data; and
one or more processors for executing machine readable code loaded therein,
wherein the flash memory device performs at least one of data write/read/erase operations under control of the one or more processors,
the flash memory device comprises a plurality of flash arrays therein, and
the plurality of flash arrays is divided into partitions depending on at least two or more page sizes of data patterns.

5. The device of claim 4, wherein the flash memory device comprises:
a buffer that buffers data;
a controller that controls the data of the buffer into a page of a block of a corresponding flash array, or reads from the buffer, data previously-stored in the page of the block of the corresponding flash array; and
the plurality of flash arrays store the data of the buffer, or provide previously-stored data to the buffer, according to a memory command of the controller.

6. The device of claim 5, wherein, when sequential write data patterns have a capacity larger than a first predetermined size, then a partition of a large page size from among the at least two or more page sizes is allotted, and
when random partial data patterns have a capacity larger than a second predetermined size range, then a partition of a small page size from among the at least two or more page sizes is allotted.

7. The device of claim 5, wherein the flash array comprises a plurality of blocks, and
the block comprises a plurality of pages.

8. A method for storing data in a flash memory device, the method comprising:
selecting by a controller any one of a plurality of flash array groups corresponding to at least two or more page sizes, depending on a data pattern of data; and
storing the data in a flash array corresponding to the selected page size.

9. The method of claim 8, wherein storing the data in the flash array corresponding to the selected page size comprises writing the data in a page region of a block of the corresponding flash array in the selected page size, when the data pattern is larger than or equal to the selected page size.

10. The method of claim 8, wherein storing the data in the flash array corresponding to the selected page size comprises:
when the data pattern is smaller than the selected page size, reading data from a page of a block of the corresponding flash array and padding the read data to a buffer; and
writing the padded data of the buffer and data to be stored, into a page region of the block of the corresponding flash array in the selected page size.

11. The method of claim 8, wherein the flash array comprises a plurality of blocks, and
the block comprises a plurality of pages.

12. A method for storing data in a flash memory device, the method comprising:
determining by a controller an Input/Output (I/O) data pattern size;
when the I/O pattern size of a sequential write data pattern is determined to be greater than a predetermined threshold capacity, selecting a first flash array and storing first data in the first flash array; and
when the I/O pattern size is determined to be a size corresponding to a random partial data pattern, selecting a second flash array and storing the first data in the second flash array.

13. The method of claim 12, wherein storing the first data in the first flash array comprises, when the first data is larger than or equal to a page size of the first flash array, writing the first data into a page region of a temporary block of the first flash array.

14. The method of claim 12, wherein storing the first data in the second flash array comprises:
when the first data is smaller than a page size of the second flash array, reading second data from a page of an existing block of the second flash array and padding the read second data to a buffer; and
writing the padded second data of the buffer and the first data into a page region of a temporary block of the second flash array,
wherein the sum of a size of the first data and a size of the second data correspond to a page size of the second flash array.

15. The method of claim 12, wherein the flash array comprises a plurality of blocks, and
the block comprises a plurality of pages.
